# EUROPÄISCHE PATENTSCHRIFT

(11) **EP 1 614 611 B1**
(45) Veröffentlichungstag und Bekanntmachung des Hinweises auf die Patenterteilung: **05.09.2007**
(21) Anmeldenummer: 05009925.8
(22) Anmeldetag: 06.05.2005
(51) Int. Cl.: B62D 35/00

(54) **Befestigungselement für einen Spoilerflügel eines Kraftfahrzeugs**
Fastening element for a spoiler wing of a motor vehicle
Élément de fixation pour un déflecteur aérodynamique d'un bequet d'un véhicule

(30) Priorität: 09.07.2004 DE 102004033175
(43) Veröffentlichungstag der Anmeldung: 11.01.2006
(73) Patentinhaber: Dr.Ing. h.c. F. Porsche Aktiengesellschaft, 70432 Stuttgart (DE)
(72) Erfinder: Hillgärtner, Klaus, 75449 Wurmberg (DE)

(56) Entgegenhaltungen:
- EP-A- 0 882 642
- WO-A-97/32770
- DE-A1- 2 649 953

## Beschreibung

Die Erfindung bezieht sich auf ein Befestigungselement für einen Spoilerflügel eines Kraftfahrzeugs nach dem Oberbegriff des Anspruchs 1.

Die Verbindung eines Heckspoilers bzw. eines Spoilerflügels eines Kraftfahrzeuges mit einem Verstellzylinder erfolgt über mindestens ein Befestigungselement, welches einerseits am Verstellzylinder gehalten ist und andererseits am Spoilerflügel festgesetzt wird. Die Befestigung kann über Schraubmittel bzw. bajonettverschlussartige Verbindungselemente erfolgen.

Aufgabe der Erfindung ist es, ein verbessertes Befestigungselement zu schaffen, mit dem der verstellbare Spoilerflügel in einfacher Montageweise mit einem Verstellzylinder verbindbar ist.

Diese Aufgabe wird erfindungsgemäß durch die Merkmale des Anspruchs 1 gelöst. Weitere vorteilhafte Merkmale beinhalten die Unteransprüche.

Die mit der Erfindung hauptsächlich erzielten Vorteile bestehen darin, dass die Einzelteile des Befestigungselements aus einfach herzustellenden Drehteilen bestehen, die beim Montieren zum Zwecke des Haltens des Spoilerflügels, nur durch gegenseitiges Verschrauben miteinander zu verbinden sind.

So umfasst nach der Erfindung das Befestigungselement ein mit einem Außenrohr des Verstellzylinders verbundenes Aufnahmeelement mit einem angeformten zentrischen Gewindezapfen. Dieser wird mit einer Aufsetzhülse verbunden, die einen Spoilerflügel unmittelbar trägt und zwischen dieser Aufsetzhülse und einer Befestigungsmutter ist der Spoilerflügel gehalten. Hierdurch wird in vorteilhafter Weise nach der Erfindung erreicht, dass der verstellbare Spoilerflügel auf dem ortsfest im Fahrzeugaufbau gehaltenen Verstellzylinder aufsetzbar und über die Befestigungsmutter festsetzbar ist. Die Montageweise ist in einfacher Weise dergestalt, dass der Verstellzylinder mit dem Aufnahmeelement in die Aufsetzhülse hineingedreht wird, die wiederum in der Befestigungsmutter gehalten ist.

Damit ein fester Sitz des Spoilerflügels gewährleistet ist, weist das Aufnahmeelement an seiner Anlagefläche eine zentrische Erhöhung auf, welche Tellerfedern zentrierend aufnimmt und einem Teller der Aufsetzhülse abstützend gegenübersteht. Hierdurch ist zwischen dem Aufnahmeelement und der Aufsetzhülse ein fester Sitz mit Toleranzausgleich gewährleistet.

Zur zentrierten Anordnung der Aufsetzhülse und somit auch der weiteren Teile des Befestigungselements sowie zum dichtenden Abschluss des Außenrohres des Verstellzylinders weist der Teller der Aufsetzhülse einen abgesetzten Randbereich auf, der sich passend auf eine Stirnseite des Außenrohres aufsetzt. Insbesondere weist hierzu der Teller der Aufsetzhülse eine am Außenrand vorgesehene kragenförmige Eindrehung auf, die sich stirnseitig des Außenrohres des Verstellzylinders abstützt.

Die Aufsetzhülse weist ein zum Teller angeformtes zentrisches Hülsenteil mit einem Innen-und Außengewinde auf, wobei das Hülsenteil einen Innensechskant besitzt und zum Verbinden mit der Befestigungsmutter über das Außengewinde ausgebildet ist. Durch den Innensechskant im Hülsenteil kann die Aufsetzhülse in den Spoilerflügel geschraubt werden. Durch eine Bohrung im Außenrohr wird mittels eines Werkzeugs das Aufnahmeelement in die Aufsetzhülse geschraubt, wobei sich der Teller an der Erhöhung des Aufnahmeelements sowie stirnseitig des Außenrohres abstützt.

Weitere Einzelheiten der Erfindung sind in den Ansprüchen gekennzeichnet.

Ein Ausführungsbeispiel der Erfindung ist in den Zeichnungen dargestellt und wird im folgenden näher beschrieben.

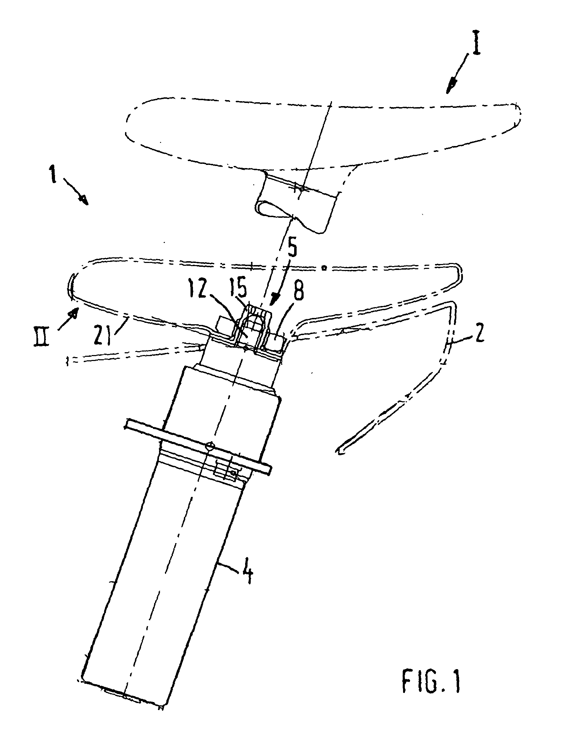

Es zeigt
- Fig. 1: eine Darstellung eines Spoilers eines Kraftfahrzeugs mit einem über einen Verstellzylinder anheb- und absenkbaren Spoilerflügel sowie ein zwischen dem Spoilerflügel und dem Verstellzylinder angeordnetes Befestigungselement, und

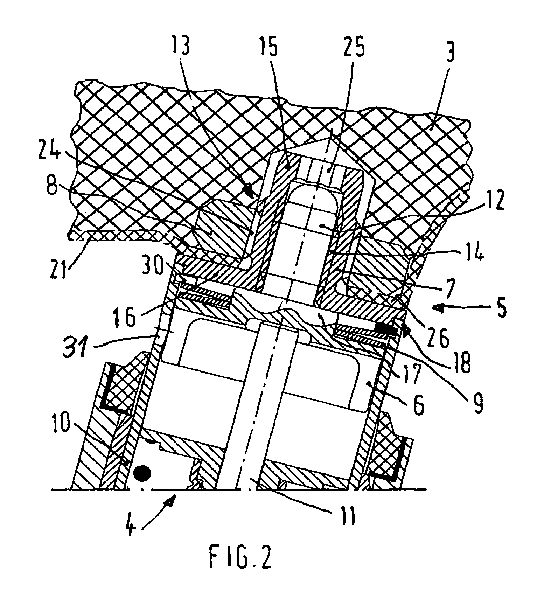

- Fig. 2: eine vergrößerte Darstellung des Befestigungselements im Schnitt.

Ein Heckspoiler 1 eines Kraftfahrzeugs, bestehend aus einem feststehenden Spoilerelement 2 sowie einem anheb- und absenkbaren Spoilerflügel 3 wird über mindestens einen Verstellzylinder 4 in eine angehobene Position I sowie in eine abgesenkte Position II verstellt. Zur festen Verbindung des Spoilerflügels 3 mit dem Verstellzylinder 4 dient ein Befestigungselement 5. Dieses umfasst ein mit dem Verstellzylinder verbundenes Aufnahmeelement 6, eine Aufsetzhülse 13 sowie eine Befestigungsmutter 8 und Tellerfedern 9.

Das Aufnahmeelement 6 ist in einem Außenrohr 10 bzw. in einem Tauchrohr des Verstellzylinders 4 gehalten eingesetzt und weist innenseitig eine Verbindung über eine Kolbenstange 11 des Verstellzylinders 4 auf. Zwischen einem Sprengring 30 und dem Aufnahmeelement 6 sind Tellerfedern 9 angeordnet, welche das Aufnahmeelement 6 bei Wirkbewegungen der Kolbenstange 11 federnd in Lage hält.

Das Aufnahmeelement 6 weist einen zentrisch angeformten Gewindezapfen 12 auf, der mit der Aufsetzhülse 13 verbunden ist, die hierzu ein zum Gewindezapfen 12 korrespondierendes Innengewinde 14 im Hülsenteil 15 besitzt. Diese Aufsetzhülse 13 umfasst einen Teller 16, welcher das angeformte Hülsenteil 15 trägt und der sich stirnseitig am Außenrohr 10 sowie an einer zentrischen Erhöhung 17 des Aufnahmeelements 6 abstützt.

Zur zentrierenden Auflage auf der Stirnfläche des Außenrohres 10 weist der Teller 16 eine randseitig umlaufende kragenförmige Eindrehung 18 auf.

Zur Festlegung des Spoilerflügels 3 auf der Aufsetzhülse 13 dient eine Befestigungsmutter 8, welche an der Spoilerwand 21 befestigt ist und in einer Ausprägung 26 angeordnet ist. Zur Montage wird die Aufsetzhülse 13 mittels des mit einem Außengewinde 24 versehenen Hülsenteils 15 in die Befestigungsmutter 8 hineingeschraubt - welche an der Spoilerwand 21 festgesetzt ist -, so dass die Spoilerwand 21 festgespannt zwischen der Befestigungsmutter 8 und dem Teller 16 des Aufsetzelements 13 zu liegen kommt. Das Einschrauben der Aufsetzhülse 13 in die Befestigungsmutter 8 mittels des Hülsenteils 15 erfolgt mit einem Werkzeug, das von innen in den Innensechskant 25 eingreift und somit die Aufsetzhülse 13 einschraubbar ist. Danach wird der Verstellzylinder 4 mittels eines Werkzeugs, das in eine Öffnung 31 des Außenrohres 10 eingreift, gedreht und mit dem Gewindezapfen 12 in das Hülsenteil 13 hineingeschraubt.

## Patentansprüche

1. Befestigungselement für einen Spoilerflügel eines Kraftfahrzeugs an einem Verstellzylinder, der den Spoilerflügel in eine angehobene und abgesenkte Position verstellt, **dadurch gekennzeichnet, dass** das Befestigungselement (5) ein mit einem Außenrohr (10) des Verstellzylinders (4) verbundenes Aufnahmeelement (6) mit einem angeformten zentrischen Gewindezapfen (12) umfasst, welcher mit einer Aufsetzhülse (13) verbunden ist, die den Spoilerflügel (3) unmittelbar trägt und zwischen dieser Aufsetzhülse (13) und einer Befestigungsmutter (8) der Spoilerflügel (3) fest eingespannt gehalten ist.

2. Befestigungselement nach Anspruch 1, **dadurch gekennzeichnet, dass** das Aufnahmeelement (6) an seiner Anlagefläche eine zentrische Erhöhung (17) aufweist, welche Tellerfedern (9) zentrierend aufnimmt und einem Teller (16) der Aufsetzhülse (13) abstützend gegenübersteht.

3. Befestigungselement nach den Ansprüchen 1 oder 2, **dadurch gekennzeichnet, dass** der Teller (16) der Aufsetzhülse (13) eine am Außenrand vorgesehene randseitige kragenförmige Eindrehung (18) aufweist, die sich stirnseitig des Außenrohres (10) des Verstellzylinders (4) abstützt.

4. Befestigungselement nach den Ansprüchen 1, 2 oder 3, **dadurch gekennzeichnet, dass** die Aufsetzhülse (13) ein zum Teller (16) angeformtes zentrisches Hülsenteil (15) mit Innen- und Außengewinde (14, 24) aufweist, das einen Werkzeugeingriff bzw. einen Innensechskant (25) besitzt und zum Verbinden mit der Befestigungsmutter (8) über das Außengewinde (24) ausgebildet ist.

5. Befestigungselement nach Ansprüchen 1, 2, 3 oder 4, **dadurch gekennzeichnet, dass** die Befestigungsmutter (8) in einer Ausprägung (26) des Spoilerflügels (3) angeordnet ist, die eine ebene Anlagefläche zur Befestigungsmutter (8) sowie zum Teller (16) der Aufsetzhülse (13) aufweist.

6. Befestigungselement nach einem der vorhergehenden Ansprüche, **dadurch gekennzeichnet, dass** die Befestigungsmutter (8) fest anliegend an der Spoilerwand (21) des Spoilerflügels (3) ausgebildet ist.

7. Befestigungselement nach einem der vorhergehenden Ansprüche, **dadurch gekennzeichnet, dass** die zwischen dem Teller (16) der Aufsetzhülse (13) und dem Aufnahmeelement (6) angeordneten Tellerfedern (9) an einem Sprengring (30) abgestützt sind, der beabstandet zur Unterfläche des Tellers (16) ausgeführt ist.

## Claims

1. A fastening element for a spoiler wing of a motor vehicle on an adjustment cylinder which adjusts the spoiler wing into a raised and a lowered position, **characterized in that** the fastening element (5) comprises a receiving element (6) connected to an outer tube (10) of the adjustment cylinder (4) and having a central threaded pin (12) which is formed integrally thereon and which is connected to an attachment sleeve (13) which directly supports the spoiler wing (3), and the spoiler wing (3) is held clamped in a fixed manner between the said attachment sleeve (13) and a fastening nut (8).

2. A fastening element according to Claim 1, **characterized in that** the abutment face of the receiving element (6) has a central raised portion (17) which receives plate springs (9) in a centring manner and which is opposite a plate (16) of the attachment sleeve (13) in a supporting manner.

3. A fastening element according to Claims 1 or 2, **characterized in that** the plate (16) of the attachment sleeve (13) has a marginal collar-shaped turned groove (18) which is provided on the outer edge and which is supported on the end face of the outer tube (10) of the adjustment cylinder (4).

4. A fastening element according to Claims 1, 2 or 3, **characterized in that** the attachment sleeve (13) has a central sleeve part (15) with an internal and external thread (14, 24), which sleeve part (15) is formed integrally on the plate (16) and which has a tool-engagement portion or a hexagon socket (25) and is designed for connexion to the fastening nut (8) by way of the external thread (24).

5. A fastening element according to Claims 1, 2, 3 or 4, **characterized in that** the fastening nut (8) is arranged in a pressed-out portion (26) of the spoiler wing (3), which pressed-out portion has a flat abutment face with respect to the fastening nut (8) and with respect to the plate (16) of the attachment sleeve (13).

6. A fastening element according to any one of the preceding Claims, **characterized in that** the fastening nut (8) is designed so as to rest against the spoiler wall (21) of the spoiler wing (3) in a fixed manner.

7. A fastening element according to any one of the preceding Claims, **characterized in that** the plate springs (9) arranged between the plate (16) of the attachment sleeve (13) and the receiving element (6) are supported on a retaining ring (30) which is formed at a distance from the under surface of the plate (16).

## Revendications

1. Élément de fixation pour une ailette de déflecteur d'un véhicule automobile contre un vérin de réglage, qui amène l'ailette de déflecteur dans une position haute et une position basse, **caractérisé en ce que** l'élément de fixation (5) comporte un élément de réception (6), qui est assemblé à un tube extérieur (10) du vérin de réglage (4) et au centre duquel est formé un téton fileté (12), qui est assemblé à une douille de montage (13), qui porte directement l'ailette de déflecteur (3), et l'ailette de déflecteur (3) est maintenue fermement entre cette douille de montage (13) et un écrou de fixation (8).

2. Élément de fixation selon la revendication 1, **caractérisé en ce que** l'élément de réception (6) comporte sur sa face d'appui une surélévation (17) centrale, sur laquelle sont logés de manière centrée des ressorts Belleville (9) et laquelle est située en face d'un disque (16) de la douille de montage (13) en vue de le supporter.

3. Élément de fixation selon la revendication 1 ou 2, **caractérisé en ce que** le disque (16) de la douille de montage (13) comporte une gorge (18) en forme de collerette, qui est prévue sur le pourtour du bord extérieur et qui prend appui sur la face frontale du tube extérieur (10) du vérin de réglage (4).

4. Élément de fixation selon les revendications 1, 2 ou 3, **caractérisé en ce que** la douille de montage (13) comporte un manchon (15) avec un taraudage (14) et un filetage extérieur (24), qui est centré par rapport au disque (16) et qui comporte un élément de prise pour un outil, à savoir un six pans creux (25) et est réalisé pour être assemblé à l'écrou de fixation (8) au moyen du filetage extérieur (24).

5. Élément de fixation selon les revendications 1, 2, 3 ou 4, **caractérisé en ce que** l'écrou de fixation (8) est disposé dans un évidement (26) de l'ailette de déflecteur (3), lequel comporte une surface d'appui plane vers l'écrou de fixation (8) et vers le disque (16) de la douille de montage (13).

6. Élément de fixation selon l'une quelconque des revendications précédentes, **caractérisé en ce que** l'écrou de fixation (8) est réalisé pour prendre appui de manière fixe contre la paroi (21) de l'ailette de déflecteur (3).

7. Élément de fixation selon l'une quelconque des revendications précédentes, **caractérisé en ce que** les ressorts Belleville (9), disposés entre le disque (16) de la douille de montage (13) et l'élément de réception (6), sont en appui contre un circlips (30) qui est réalisé à distance de la face inférieure du disque (16).
